# EUROPEAN PATENT SPECIFICATION

(11) **EP 2 439 101 B1**
(45) Date of publication and mention of the grant of the patent: **11.11.2020**
(21) Application number: 10783207.3
(22) Date of filing: 29.03.2010
(51) Int. Cl.: B60N 2/28, B60R 22/10

(54) **CHILD SEAT**
KINDERSITZ
SIÈGE POUR ENFANT

(30) Priority: 01.06.2009 JP 2009132187
(43) Date of publication of application: 11.04.2012
(73) Proprietor: Joyson Safety Systems Japan K.K., Shinagawa-ku Tokyo (JP)
(72) Inventor: YOKOHASHI, Matsuto, Tokyo 107-8508 (JP)
(74) Representative: Banzer, Hans-Jörg
(86) International application number: PCT/JP2010/055524
(87) International publication number: WO 2010/140421

(56) References cited:
- EP-A1- 1 616 509
- JP-A- 10 071 928
- JP-A- H11 189 128
- JP-A- 2004 050 920
- JP-A- 2005 178 513
- JP-A- 2005 247 277
- JP-A- 2007 076 536
- JP-U- 60 122 259
- US-A- 5 061 012

## Description

### Technical Field

The present invention relates to a child seat installed in an automotive seat, and more specifically, it relates to a child seat to the crotch belt of which a cover is attached.

### Background Art

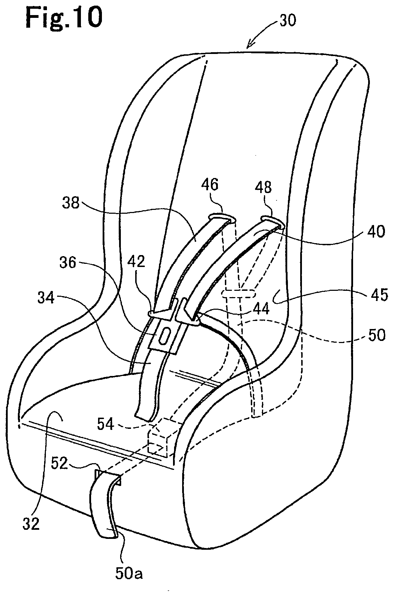

The outline of the configuration of a child seat will be described with reference to Fig. 10.

The proximal end of a crotch belt 34 is fixed to the front center of a seat portion 32 of a child seat 30, and a buckle 36 is attached to the distal end of the crotch belt 34. Tongues 42 and 44 are attached, respectively, to a right webbing 38 placed on the right side of the body of a child seated in the child seat 30 and a left webbing 40 placed on the left side of the body of the child. The tongues 42 and 44 are inserted into and latched to the buckle 36.

The back ends of the webbings 38 and 40 are pulled through openings 46 and 48 in a backrest portion 45 of the child seat 30 into the inside of the backrest portion 45 of the child seat 30 and are connected to the proximal end of a tightening webbing 50 inside the backrest portion 45.

The distal end 50a of the tightening webbing 50 is passed through the inside of the seat portion 32 and is pulled out of the child seat 30 through an opening 52 in the front surface of the child seat 30. A web adjuster 54 for locking the tightening webbing 50 is provided inside the seat portion 32 of the child seat 30.

A child seat according to the preamble of claim 1 is known from EP 1 616 509 A1.

Paragraph 0002 of Japanese Unexamined Patent Application Publication No. 2001-151075 describes lining a crotch belt with a cushion material made of urethane, a rigid material, or the like to provide the crotch belt in a standing state.

### Summary of Invention

### Technical Problem

If a crotch belt is always upright as in Japanese Unexamined Patent Application Publication No. 2001-151075, the crotch belt may become an obstacle when a child is placed on and lifted from the seat portion. For example, if the weight of an infant is large, a large amount of labor is required for lifting the infant up high and sitting the infant behind the crotch belt. When a crotch belt is not free-standing, the crotch belt is often under the buttocks of a child, and it is inconvenient to latch to the buckle.

An object of the present invention is to solve such a problem and to provide a child seat which a child can be easily placed in and removed from.

### Solution to Problem

The present invention provides a child seat as defined in claim 1. The dependent claims define preferred and/or advantageous embodiments of the invention.

A child seat of a first aspect includes a seat portion on which a child sits, a webbing placed on the body of the child sitting on the seat portion, a tongue provided at the distal end of the webbing, a crotch belt the proximal end of which is connected to the front center of the seat portion, a buckle that is provided at the distal end of the crotch belt and to which the tongue is latched, and a cover that covers the crotch belt, wherein the cover is configured to make the crotch belt free-standing in a position inclined toward the front of the child seat when the tongue is not latched to the buckle and to permit the crotch belt to lean toward the back of the child seat owing to the tension from the webbing when the tongue is latched to the buckle. The cover is a tube having a vertical hole through which the crotch belt is passed, and the lower end face of the cover is an inclined surface that is inclined upward toward the front of the child seat with respect to the axial direction of the tube.

A child seat of a second aspect is the child seat according to the first aspect, wherein an extending portion extending toward the back is provided in a portion of the lower end of the cover facing the back of the child seat.

A child seat of a third aspect is the child seat according to the second aspect, wherein the bottom surface of the extending portion is flush with the inclined surface.

A child seat of a fourth aspect is the child seat according to any one of the first to third aspects, wherein a cutout extending upward from the lower end is provided in a surface of the cover facing the front of the child seat.

A child seat of a fifth aspect is the child seat according to any one of the first to fourth aspects, wherein the cover is provided with a harness passage hole that extends vertically and through which a harness leading to the buckle is passed.

A child seat of a sixth aspect is the child seat according to any one of the first to fifth aspects, wherein the cover is made of rubber or elastomer.

A child seat of an seventh aspect is the child seat according to the sixth aspect, wherein the lower end face of the cover is in contact with the upper surface of the seat portion, and the upper end of the cover is in contact with the buckle.

### Advantageous Effects of Invention

In the child seat of the present invention, when the tongue is not latched to the buckle, the cover and the crotch belt passed therethrough are free-standing in a position inclined toward the front of the child seat. Therefore, when a child is placed on and removed from the seat portion, the crotch belt is less likely to become an obstacle, and the child can be easily placed and removed. In addition, the crotch belt is prevented from being under the buttocks of the child. In the present invention, when the tongue is latched to the buckle, the crotch belt leans toward the back of the child seat owing to the tension from the webbing, and therefore the webbing and the crotch belt fit the body of the child.

When the tongue is not latched to the buckle, the cover and the crotch belt passed therethrough are free-standing, and therefore the worker can connect the tongue to the buckle easily. It is also possible for the worker to push the cover toward the back of the child seat, to thereby lean the crotch belt backward, and to thereby connect the tongue to the buckle easily.

In the case where the lower end face of the cover is an inclined surface that is inclined upward toward the front of the child seat as in the first aspect, the cover is in a forward inclined position when the cover is free-standing on the seat portion.

In the case where an extending portion is provided in a portion of the lower end of the cover facing the back of the child seat as in the second aspect, the cover is less likely to fall toward the back of the child seat.

In the case where the bottom surface of the extending portion is flush with the inclined surface of the lower end face of the cover as in the third aspect, the cover is free-standing stably.

In the case where a cutout is provided in the cover as in the fourth aspect, the crotch belt can be passed through the cover easily. The lower end of the crotch belt passed through the cover can be connected to the seat portion easily through the cutout. In the case where this cutout is provided in the front surface of the cover, the rigidity of the back surface of the cover is higher than that of the front surface, and therefore the cover is less likely to fall toward the back of the child seat.

In the case where the cover is provided with a harness passage hole as in the fifth aspect, the harness extending from the buckle is prevented from interfering with the crotch belt.

In the case where the cover is made of rubber or elastomer as in the sixth aspect, the cover is soft to touch. In addition, the contact noise between the cover and the seat portion is small.

In the case where the cover is made of rubber or elastomer, the lower end face of the cover can be brought into contact with the upper surface of the seat portion and the upper end of the cover can be brought into contact with the buckle as in the seventh aspect, that is to say, the cover can be put between the seat portion and the buckle. In this configuration, the lower end face of the cover is pressed against the seat portion, and the cover thereby keeps a free-standing position. However, by pushing the free-standing cover backward, the cover can be leaned backward.

### Brief Description of Drawings

[Fig. 1] Fig. 1 is a perspective view of a child seat according to an embodiment.
[Fig. 2] Fig. 2 is an exploded perspective view of the vicinity of a crotch belt of the child seat of Fig. 1.
[Fig. 3] Fig. 3 is a sectional view of the crotch belt portion of the child seat of Fig. 1.

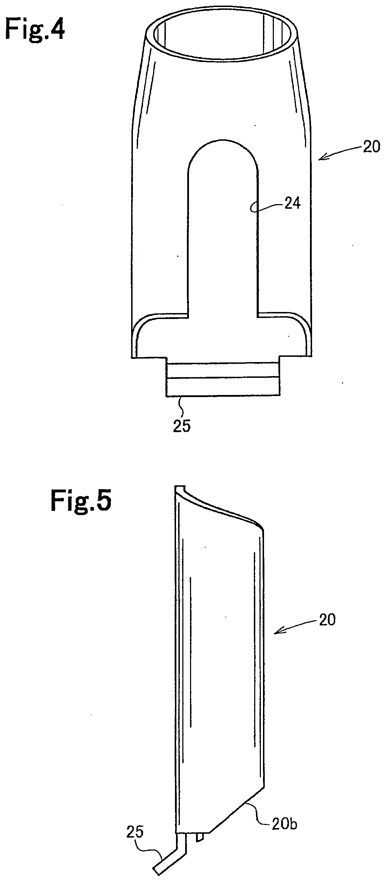

[Fig. 4] Fig. 4 is a front view of a cover.
[Fig. 5] Fig. 5 is a side view of the cover.

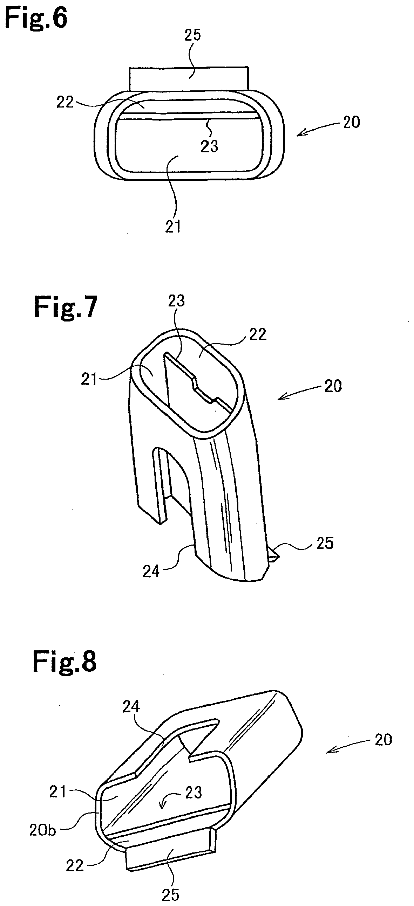

[Fig. 6] Fig. 6 is a top view of the cover.
[Fig. 7] Fig. 7 is a perspective view of the cover from above.
[Fig. 8] Fig. 8 is a perspective view of the cover from below.
[Fig. 9] Figs. 9a and 9b are schematic side views of the child seat. Fig. 9a shows a state where the webbing is not latched. Fig. 9b shows a state where the webbing is latched.
[Fig. 10] Fig. 10 is a perspective view of a conventional child seat.

### Description of Embodiments

The embodiment will now be described with reference to the drawings.

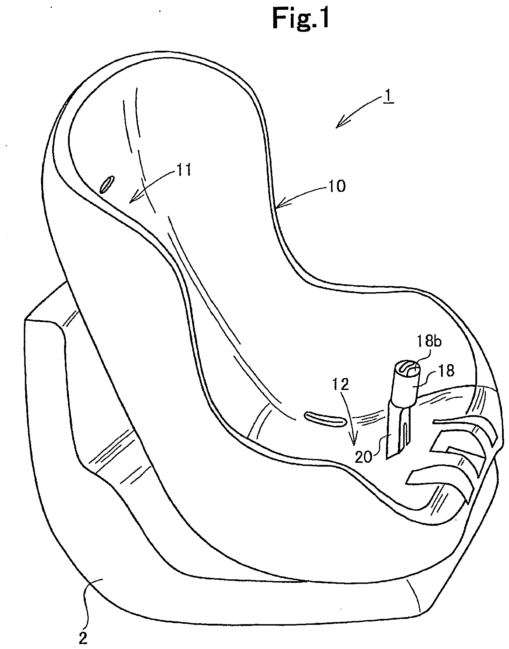

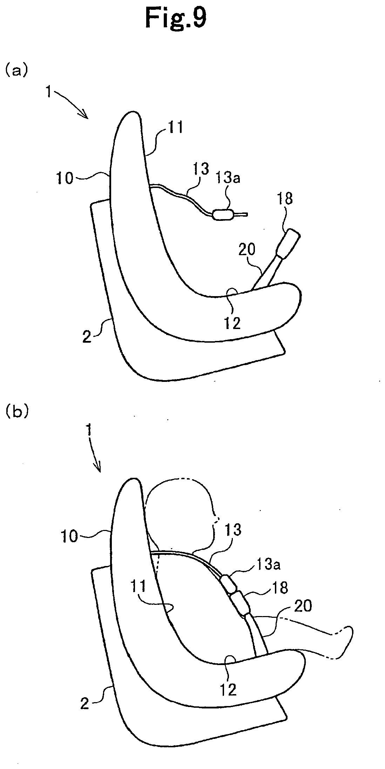

As shown in Fig. 1, this child seat 1 has a child seat main body 10 and a base 2 to which the child seat main body 10 is attached so as to be able to be reclined. The child seat main body 10 has a backrest portion 11 and a seat portion 12. In the following description, the words "front" and "back" mean the front and back as viewed by an occupant (child) seated in the child seat main body 10. The words "left" and "right" mean the left and right as viewed by this occupant. A webbing 13 (Figs. 9a and 9b) placed on the front surface of the body of the occupant seated in the child seat main body 10 extends from the front surface of the backrest portion 11. A tongue 13a is provided at the distal end of the webbing 13. Although not shown in detail, this webbing 13 has the same configuration as the webbings 38 and 40 of Fig. 10 and is attached to the child seat main body 10 in the same manner as the webbings 38 and 40 of Fig. 10.

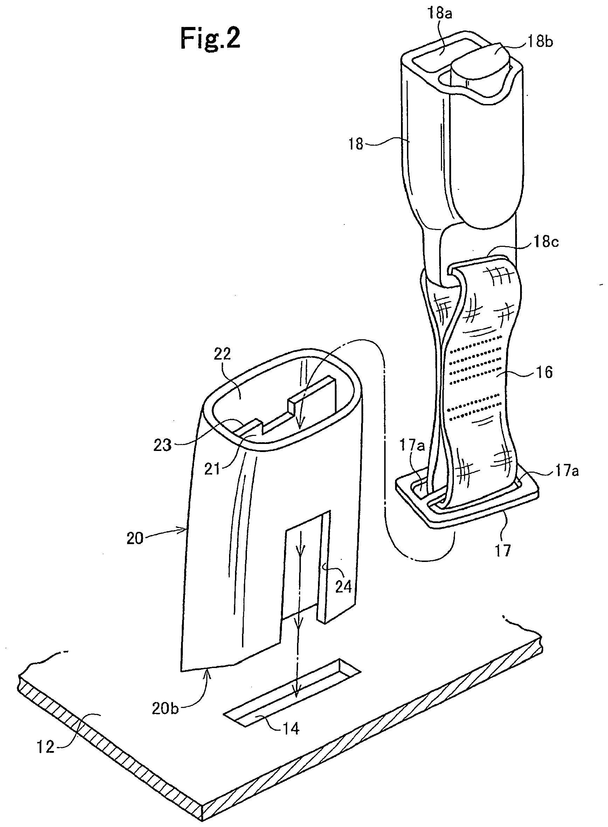

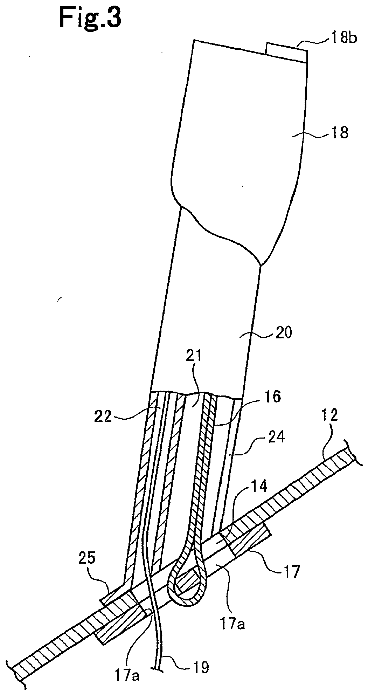

As shown in Figs. 2 and 3, a crotch belt attachment opening 14 is provided in the center in the left-right direction of the front portion of the seat portion 12. The crotch belt attachment opening 14 is a slit that is long in the left-right direction.

A mounting fitting 17 is attached to the lower portion of the crotch belt 16, and a buckle 18 is attached to the upper portion of the crotch belt 16. The mounting fitting 17 is a plate that is long in the left-right direction and has two slits 17a extending in the left-right direction. The crotch belt 16 is passed through one of the slits 17a from above, then passed through the other slit 17a from below, and thereby connected to the mounting fitting 17.

The buckle 18 has a tongue insertion hole 18a and a press button 18b in the upper surface portion thereof and has a belt passage hole 18c in the lower portion thereof. The crotch belt 16 is passed through the belt passage hole 18c. A latch mechanism that latches the inserted tongue 13a is provided inside the buckle 18. The press button 18b is used to release this latch. A tongue sensor that detects the latched tongue 13a is provided inside the buckle 18. A harness 19 (Fig. 3) for transmitting a signal from this sensor is pulled out from the buckle 18.

A cover 20 is attached to the crotch belt 16. The cover 20 is a vertically long, laterally wide, substantially flattened square tubular member made of an elastic material such as rubber or elastomer. The cover 20 has such a rigidity that when the tongue 13a is not latched to the buckle 18, the cover 20 can make the crotch belt 16 free-standing in a forward inclined position as described later and that when the tongue 13a is latched to the buckle 18, the cover 20 can elastically deform so as to lean backward owing to the tension from the webbing 13. The cover 20 can elastically deform so as to lean backward also when pushed backward by a worker. A vertical hole 21 through which the crotch belt 16 is passed is provided in the front portion of the cover 20, and a passage hole 22 for the harness 19 is provided in the back portion of the cover 20. A partition 23 exists between the holes 21 and 22.

A vertically long cutout 24 extending upward from the lower edge is provided in the front surface of the cover 20. The cutout 24 facilitates passing the mounting fitting 17 and the crotch belt 16 through the vertical hole 21 and engaging the mounting fitting 17 with the crotch belt attachment opening 14 of the seat portion 12.

The lower end face 20b of the cover 20 is inclined upward toward the front. An extending portion 25 extends backward from the back edge of the lower end of the cover 20. The bottom surface of the extending portion 25 is flush with the lower end face 20b of the cover 20.

To attach the cover 20 to the crotch belt 16, the mounting fitting 17 is inserted into the vertical hole 21 from the upper end of the cover 20. Then, the worker inserts their finger or a suitable hook tool through the cutout 24, pulls the mounting fitting 17 downward, and passes the mounting fitting 17 and the crotch belt 16 connected thereto through the vertical hole 21. After this or prior to this, the harness 19 extending from the buckle 18 is passed through the passage hole 22. The harness 19 is passed through the opening 17a of the mounting fitting 17.

The mounting fitting 17 is passed through the attachment opening 14 in the seat portion 12 with the plate surface substantially perpendicular to the seat portion 12, is then turned such that the plate surface faces the lower side of the seat portion 12, and is brought into contact with the lower surface of the edge portion of the opening 14, and the crotch belt 16 is thereby attached to the seat portion 12 as shown in Fig. 3. In this state, the lower end face 20b of the cover 20 is in contact with the upper surface of the seat portion 12, the upper end of the cover 20 is in contact with the buckle 18, and the cover 20 is put between the seat portion 12 and the buckle 18. The engagement of the mounting fitting 17 with the attachment opening 14 can be performed easily through the cutout 24.

In this state, the lower end face of the cover 20 is lightly pressed against the upper surface of the seat portion 12, and the cover 20 is free-standing. Because the lower end face 20b of the cover 20 is inclined upward toward the front, the cover 20 is free-standing in a position inclined forward with respect to the upper surface of the seat portion 12 as shown in Figs. 3 and 9a. When this free-standing cover 20 is pushed backward, the cover 20 elastically deforms so as to fall backward. Because the lower end face 20b of the cover 20 is inclined upward toward the front as described above, the extending portion 25 extends backward, and the bottom surface of the extending portion 25 is flush with the lower end face 20b and in contact with the upper surface of the seat portion 12 as shown in Fig. 3, the cover 20 is less likely to fall backward.

After the crotch belt 16 and the cover 20 are attached to the seat portion 12 in this manner, a soft cover is put so as to cover at least the front surface of the backrest portion 11 and the upper surface of the seat portion 12 of the child seat main body 10, and a child restraint webbing 13 is attached in the same manner as shown in Fig. 10. Thus, a child seat product is completed.

In the child seat 1 constructed as above, when the tongue 13a is not latched to the buckle 18, the crotch belt 16 is free-standing in a forward inclined position owing to the cover 20 attached to the crotch belt 16. Therefore, when a child is placed on and removed from the seat portion 12, the crotch belt 16 is less likely to become an obstacle, and the child can be easily placed and removed. In addition, because the cover 20 is less likely to fall backward, when a child is placed in the child seat, the cover 20 is prevented from being under the buttocks of the child. For this reason, the child can be easily placed in the child seat 10. If necessary, the cover 20 may be laid down forward, and a child may be placed and removed with and the cover 20 and the crotch belt 16 laid down on the seat portion 12. In the case where the tongue 13a is latched to the buckle 18, because the crotch belt 16 is free standing, the tongue 13a can be easily latched to the buckle 18. It is also possible to push the cover 20 backward, to thereby lean the cover 20 backward, and to then latch the tongue 13a to the buckle 18. At this time, the cover 20 can be easily pushed and leaned backward. After the tongue 13a is latched to the buckle 18, the length of the webbing 13 is adjusted such that the webbing 13 fits the body of the child (that is to say, the webbing 13 is tightened). As shown in Fig. 9b, the cover 20 leans backward owing to the tension from the webbing 13, and therefore the webbing 13 and the crotch belt 16 fit the body of the child tightly.

The cover 20 is made of rubber or elastomer and is therefore soft to touch.

In this embodiment, the harness 19 is passed through a hole 22 different from the vertical hole 21 for the crotch belt 16, and therefore the harness 19 and the crotch belt 16 are prevented from rubbing against each other and the harness 19 is prevented from deteriorating.

In this embodiment, a cutout 24 is provided in the front surface of the cover 20. Owing to the cutout 24, the mounting fitting 17 and the crotch belt 16 can be easily passed through the vertical hole 21 of the cover 20. When the lower end of the crotch belt 16 is connected to the seat portion 12, the mounting fitting 17 can be easily engaged with the attachment opening 14 through the cutout 24. The cutout 24 does not exist in the back surface portion of the cover 20, and the rigidity of the back surface portion of the cover 20 is high. Therefore, the cover 20 is less likely to lean backward.

The above-described embodiment is merely an example of the present invention. The present invention may also be embodied in forms other than the shown one. For example, the press button 18b may be provided not in the upper surface of the buckle 18 but in the front surface or side surface thereof. The harness 19 may be omitted.

Although a particular aspect of the present invention has been described in detail, it will be obvious to those skilled in the art that various changes may be made as long as they remain within the intent and scope of the present invention as defined in the claims.

## Claims

1. A child seat (1) comprising:
a seat portion (12) on which a child sits;
a webbing (13) placed on the body of the child sitting on the seat portion (12);
a tongue (13a) provided at the distal end of the webbing (13);
a crotch belt (16), the proximal end of which is connected to the front center of the seat portion (12);
a buckle (18) that is provided at the distal end of the crotch belt (16) and to which the tongue (13a) is latched; and
a cover (20) that covers the crotch belt (16),
wherein the cover (20) is configured to make the crotch belt (16) free-standing in a position inclined toward the front of the child seat (1) when the tongue (13a) is not latched to the buckle (18) and to permit the crotch belt (16) to lean toward the back of the child seat (1) owing to the tension from the webbing (13) when the tongue (13a) is latched to the buckle (18),
**characterized in that**
the cover (20) is a tube having a vertical hole (21) through which the crotch belt (16) is passed, and the lower end face (20b) of the cover (20) is an inclined surface that is inclined upward toward the front of the child seat (1) with respect to the axial direction of the tube.

2. The child seat (1) according to claim 1, wherein an extending portion (25) extending toward the back is provided in a portion of the lower end of the cover (20) facing the back of the child seat (1).

3. The child seat (1) according to claim 2, wherein the bottom surface of the extending portion (25) is flush with the inclined surface.

4. The child seat (1) according to any one of claims 1 to 3, wherein a cutout (24) extending upward from the lower end is provided in a surface of the cover (20) facing the front of the child seat (1).

5. The child seat (1) according to any one of claims 1 to 4, wherein the cover (20) is provided with a harness passage hole (22) that extends vertically and through which a harness (19) leading to the buckle (18) is passed.

6. The child seat (1) according to any one of claims 1 to 5, wherein the cover (20) is made of rubber or elastomer.

7. The child seat (1) according to claim 6, wherein the lower end face (20b) of the cover (20) is in contact with the upper surface of the seat portion (12), and the upper end of the cover (20) is in contact with the buckle (18).

8. The child seat (1) according to claim 5, wherein the cover (20) is tubular, and the inside of the cover (20) is divided by a partition (23) into the vertical hole (21) through which the crotch belt (16) is passed and the harness passage hole (22) through which the harness (19) is passed.

9. The child seat (1) according to claim 5, wherein the buckle (18) has a tongue sensor that detects that the tongue (13a) is latched to the buckle (18), and the harness (19) transmits a signal from the tongue sensor.

10. The child seat (1) according to any one of claims 1 to 9, wherein a mounting fitting (17) is attached to the lower portion of the crotch belt (16), a crotch belt attachment opening (14) is provided in the front center of the seat portion (12), and the crotch belt (16) is connected to the seat portion (12) by engaging the mounting fitting (17) with the crotch belt attachment opening (14).

## Patentansprüche

1. Kindersitz (1) umfassend:
einen Sitzabschnitt (12), auf welchem ein Kind sitzt;
einen Gurt (13), welcher an dem Körper des Kindes, das auf dem Sitzabschnitt (12) sitzt, angeordnet ist;
eine Zunge (13a), welche an dem distalen Ende des Gurtes (13) vorhanden ist;
einen Schrittgurt (16), dessen proximales Ende mit der vorderen Mitte des Sitzabschnitts (12) verbunden ist;
ein Gurtschloss (18), welches an dem distalen Ende des Schrittgurts (16) vorhanden ist und mit welchem die Zunge (13a) verriegelt wird; und
eine Abdeckung (20), welche den Schrittgurt (16) überdeckt,
wobei die Abdeckung (20) ausgestaltet ist, so dass der Schrittgurt (16) in einer Position geneigt zu der Vorderseite des Kindersitzes (1) freisteht, wenn die Zunge (13a) nicht mit dem Gurtschloss (18) verriegelt ist, und um zu ermöglichen, dass der Schrittgurt (16) wegen des Zugs von dem Gurt (13) zu der Rückseite des Kindersitzes (1) geneigt ist, wenn die Zunge (13a) mit dem Gurtschloss (18) verriegelt ist,
**dadurch gekennzeichnet,**
**dass** die Abdeckung (20) ein Rohr ist, welches ein vertikales Loch (21) aufweist, durch welches der Schrittgurt (16) verläuft, und dass die untere Endfläche (20b) der Abdeckung (20) eine schräg verlaufende Fläche ist, welche nach oben zu der Vorderseite des Kindersitzes (1) bezüglich der axialen Richtung des Rohrs schräg verläuft.

2. Kindersitz (1) nach Anspruch 1, wobei sich ein Verlängerungsabschnitt (25), welcher sich zu der Rückseite erstreckt, in einem Abschnitt des unteren Endes der Abdeckung (20), welcher der Rückseite des Kindersitzes (1) gegenüberliegt, vorhanden ist.

3. Kindersitz (1) nach Anspruch 2, wobei die Bodenfläche des Verlängerungsabschnitts (25) bündig mit der schräg verlaufenden Fläche ist.

4. Kindersitz (1) nach einem der Ansprüche 1 bis 3, wobei ein Ausschnitt (24), welcher sich von dem unteren Ende nach oben erstreckt, in einer Oberfläche der Abdeckung (20), welche der Vorderseite des Kindersitzes (1) gegenüberliegt, vorhanden ist.

5. Kindersitz (1) nach einem der Ansprüche 1 bis 4, wobei die Abdeckung (20) mit einem Gurtzeugdurchgangsloch (22) versehen ist, welches sich vertikal erstreckt und durch welches ein Gurtzeug (19), welches zu dem Gurtschloss (18) führt, verläuft.

6. Kindersitz (1) nach einem der Ansprüche 1 bis 5, wobei die Abdeckung (20) aus Gummi oder einem Elastomer hergestellt ist.

7. Kindersitz (1) nach Anspruch 6, wobei sich die untere Endfläche (20b) der Abdeckung (20) in Kontakt mit der oberen Oberfläche des Sitzabschnitts (12) befindet, und wobei sich das obere Ende der Abdeckung (20) in Kontakt mit dem Gurtschloss (18) befindet.

8. Kindersitz (1) nach Anspruch 5, wobei die Abdeckung (20) rohrförmig ist, und wobei die Innenseite der Abdeckung (20) durch eine Trennwand (23) in das vertikale Loch (21), durch welches der Schrittgurt (16) verläuft, und das Gurtzeugdurchgangsloch (22), durch welches das Gurtzeug (19) verläuft, unterteilt ist.

9. Kindersitz (1) nach Anspruch 5, wobei das Gurtschloss (18) einen Zungensensor aufweist, welcher erfasst, wenn die Zunge (13a) mit dem Gurtschloss (18) verriegelt ist, und wobei das Gurtzeug (19) ein Signal von dem Zungensensor überträgt.

10. Kindersitz (1) nach einem der Ansprüche 1 bis 9, wobei ein Montageanschlussstück (17) an dem unteren Abschnitt des Schrittgurts (16) angebracht ist, wobei eine Schrittgurt-Befestigungsöffnung (14) bei der vorderen Mitte des Sitzabschnitts (12) vorhanden ist, und wobei der Schrittgurt (16) mit dem Sitzabschnitt (12) verbunden ist, indem sich das Montageanschlussstück (17) mit der Schrittgurt-Befestigungsöffnung (14) in Eingriff befindet.

## Revendications

1. Siège d'enfant (1) comprenant :
une partie formant siège (12) sur laquelle un enfant peut s'assoir ;
une sangle (13) placée sur le corps de l'enfant assis sur la partie formant siège (12) ;
une languette (13a) prévue à l'extrémité distale de la sangle (13) ;
une ceinture d'entrejambe (16), dont l'extrémité proximale est reliée au centre avant de la partie formant siège (12) ;
une boucle (18) qui est prévue à l'extrémité distale de la ceinture d'entrejambe (16) et à laquelle la languette (13a) est verrouillée ; et
un couvercle (20) qui recouvre la ceinture d'entrejambe (16),
dans lequel le couvercle (20) est configuré pour rendre la ceinture d'entrejambe (16) autoportant dans une position inclinée vers l'avant du siège pour enfant (1) lorsque la languette (13a) n'est pas verrouillée à la boucle (18) et pour permettre à la ceinture d'entrejambe (16) de se pencher vers l'arrière du siège pour enfant (1) en raison de la tension de la sangle (13) lorsque la languette (13a) est verrouillé à la boucle (18),
**caractérisé en ce que** le couvercle (20) est un tube ayant un trou vertical (21) à travers lequel passe la ceinture d'entrejambe (16), et la face d'extrémité inférieure (20b) du couvercle (20) est une surface inclinée qui est inclinée vers le haut vers l'avant du siège pour enfant (1) par rapport à la direction axiale du tube.

2. Siège pour enfant (1) selon la revendication 1, dans lequel une partie d'extension (25) s'étendant vers l'arrière est prévue dans une partie de l'extrémité inférieure du couvercle (20) tournée vers le dos du siège pour enfant (1).

3. Siège pour enfant (1) selon la revendication 2, dans lequel la surface inférieure de la partie d'extension (25) affleure la surface inclinée.

4. Siège pour enfant (1) selon l'une quelconque des revendications 1 à 3, dans lequel une découpe (24) s'étendant vers le haut depuis l'extrémité inférieure est ménagée dans une surface du couvercle (20) tournée vers l'avant du siège pour enfant (1).

5. Siège pour enfant (1) selon l'une quelconque des revendications 1 à 4, dans lequel le couvercle (20) est pourvu d'un trou de passage de harnais (22) qui s'étend verticalement et à travers lequel un harnais (19) qui aboutit à la boucle (18) est passé.

6. Siège pour enfant (1) selon l'une quelconque des revendications 1 à 5, dans lequel le couvercle (20) est en caoutchouc ou en élastomère.

7. Siège pour enfant (1) selon la revendication 6, dans lequel la face d'extrémité inférieure (20b) du couvercle (20) est en contact avec la surface supérieure de la partie formant siège (12), et l'extrémité supérieure du couvercle (20) est en contact avec la boucle (18).

8. Siège pour enfant (1) selon la revendication 5, dans lequel le couvercle (20) est tubulaire, et l'intérieur du couvercle (20) est divisé par une cloison (23) en d'un part un trou vertical (21) à travers lequel la ceinture d'entrejambe (16) est passée et d'autre part le trou de passage de harnais (22) à travers lequel le harnais (19) est passé.

9. Siège pour enfant (1) selon la revendication 5, dans lequel la boucle (18) a un capteur de languette qui détecte que la languette (13a) est verrouillée sur la boucle (18), et le harnais (19) transmet un signal à partir du capteur de languette.

10. Siège d'enfant (1) selon l'une quelconque des revendications 1 à 9, dans lequel une ferrure de montage (17) est fixée à la partie inférieure de la ceinture d'entrejambe (16), une ouverture de fixation de ceinture d'entrejambe (14) est prévue dans le centre avant de la partie formant siège (12), et la ceinture d'entrejambe (16) est reliée à la partie formant siège (12) en mettant en prise avec la ferrure de montage (17) avec l'ouverture de fixation de ceinture d'entrejambe (14).
